# EUROPÄISCHE PATENTSCHRIFT

(11) **EP 2 732 350 B1**
(45) Veröffentlichungstag und Bekanntmachung des Hinweises auf die Patenterteilung: **27.02.2019**
(21) Anmeldenummer: 12737755.4
(22) Anmeldetag: 11.07.2012
(51) Int. Cl.: G05D 1/02, A47L 11/40

(54) **SELBSTFAHRENDES BODENREINIGUNGSGERÄT**
SELF-PROPELLING FLOOR CLEANING DEVICE
APPAREIL DE NETTOYAGE DES SOLS AUTOMOTEUR

(30) Priorität: 11.07.2011 DE 102011051729
(43) Veröffentlichungstag der Anmeldung: 21.05.2014
(73) Patentinhaber: Alfred Kärcher SE & Co. KG, 71364 Winnenden (DE)
(72) Erfinder: DÜNNE, Markus, 71364 Winnenden (DE)
(74) Vertreter: Hoeger, Stellrecht & Partner Patentanwälte mbB
(86) Internationale Anmeldenummer: PCT/EP2012/063551
(87) Internationale Veröffentlichungsnummer: WO 2013/007741

(56) Entgegenhaltungen:
- DE-A1- 19 615 712
- JP-A- 61 003 211
- US-A- 5 293 955
- US-A- 5 903 124
- US-A1- 2005 166 354

## Beschreibung

Die Erfindung betrifft ein selbstfahrendes Bodenreinigungsgerät, umfassend ein Fahrgestell mit einer Mittelebene, welche parallel zu einer Vorwärts-Geradeausfahrtrichtung orientiert ist und an welchem ein bezogen auf die Vorwärts-Geradeausfahrtrichtung vorderes Ende des Bodenreinigungsgeräts angeordnet oder gebildet ist, wobei das vordere Ende ein Ende des Bodenreinigungsgeräts ist, welches nach vorne am weitesten hinausragt, und eine optische Sensoreinrichtung, welche an dem Fahrgestell angeordnet ist, wobei die optische Sensoreinrichtung eine erste Sender-Empfänger-Einheit aufweist, welche bezogen auf die Vorwärts-Geradeausfahrtrichtung links von der Mittelebene angeordnet ist und ein erstes Detektionsfeld hat, welches die Mittelebene vor dem vorderen Ende kreuzt und nach vorne rechts gerichtet ist, und mindestens eine zweite Sender-Empfänger-Einheit aufweist, welche rechts von der Mittelebene angeordnet ist und ein zweites Detektionsfeld hat, welches die Mittelebene vor dem vorderen Ende kreuzt und nach vorne links gerichtet ist.

Aus der DE 10 2004 004 505 A1 ist ein selbstfahrendes Bodenreinigungsgerät bekannt, welches selbststeuernd ist, mit einer Bodenbearbeitungseinheit, einer Antriebseinheit und einer Steuereinheit zum Steuern der Bewegung, wobei der Steuereinheit zumindest ein Fühler zugeordnet ist zum Erkennen von Hindernissen und wobei der Steuereinheit zumindest ein Fortbewegungsmuster zum Befahren der zu bearbeitenden Bodenfläche vorgebbar ist. Das Bodenbearbeitungsgerät weist Sensoren zum Erfassen der Außenkontur der Bodenfläche auf. Mittels der Steuereinheit ist die Bodenfläche in Teilsegmente segmentierbar und die Teilsegmente sind nacheinander anhand eines vorgegebenen Fortbewegungsmusters befahrbar und bearbeitbar. Das Bodenbearbeitungsgerät umfasst ein Lokalisierungsglied zum Bestimmen der Lage des Bodenbearbeitungsgerätes anhand von einem oder mehreren Referenzpunkten, die aus den Sensordaten der die Außenkontur erfassenden Sensoren bestimmbar sind.

Aus der nicht vorveröffentlichten DE 10 2010 029 241.9 vom 21. Mai 2010 der gleichen Anmelderin ist ein Bodenbearbeitungsgerät mit mindestens einer Erfassungseinheit zum Erstellen von Abbildern der zu bearbeitenden Bodenfläche zu aufeinanderfolgenden Zeitpunkten während der Bewegung des Bodenbearbeitungsgeräts bekannt, wobei anhand der Abbilder eine Karte der Bodenfläche erzeugbar ist. Von dem Bodenbearbeitungsgerät ist ermittelbar, ob die Bodenfläche ein sich regelmäßig wiederholendes Grundmuster aufweist, ein das Grundmuster aufweisendes Bodenflächensegment vom Bodenbearbeitungsgerät als zu bearbeitend identifizierbar ist und das Bodenbearbeitungsgerät ein Speicherglied umfasst zur Speicherung eines einem zu bearbeitenden Bodenflächensegment zugeordneten Bereichs in der Karte.

Aus der nicht vorveröffentlichten DE 10 2010 029 238.9 vom 21. Mai 2010 der gleichen Anmelderin ist ein Bodenreinigungsgerät bekannt, welches selbstfahrend und selbstlenkend ausgebildet ist und eine Antriebseinheit, eine Bodenreinigungseinheit und eine Steuereinheit zur Steuerung der Bewegung umfasst, wobei die Steuereinheit ein Kommunikationsglied zur Kopplung des Bodenreinigungsgeräts an eine externe Bedieneinheit über ein Kommunikationsnetz aufweist, über das Anweisungen einer Bedienperson an der Bedieneinheit zur Steuerung des Bodenreinigungsgeräts übertragbar sind. Das Bodenreinigungsgerät umfasst eine der Steuereinheit zugeordnete Kameraeinheit zur Erstellung von Abbildern einer zu reinigenden Bodenfläche, welche Abbilder mittels des Kommunikationsglieds über das Kommunikationsnetz an die Bedieneinheit übertragbar sind. Die Bodenfläche ist infolge einer Anweisung der Bedienperson anhand eines vorgebbaren Reinigungsprogramms reinigbar.

Aus der US 7,805,220 B2 ist ein Reinigungsroboter bekannt, welcher Sensoren umfasst.

Aus der US 2010/0263142 A1 ist ein mobiler Reinigungsroboter bekannt, welcher einen Wandsensor umfasst, um eine Wand in einem Raum zu detektieren.

Aus der DE 196 15 712 C2 ist ein selbstfahrendes Bodenreinigungsfahrzeug bekannt, welches mit zwei in Fahrtrichtung gerichteten Ultraschallsensoren ausgerüstet ist.

Aus der US 2007/0032904 A1 ist ein selbstfahrender Arbeitsroboter bekannt, welcher einen ersten Abstandssensor zur Messung eines Abstands zu einem Hindernis in einer Frontrichtung des Roboters aufweist, und einen zweiten Abstandssensor zur Messung einer Distanz zu einem Hindernis in einer diagonalen Vorwärtsrichtung des Roboters umfasst.

Aus der US 2005/0171644 A1 ist ein autonomer mobiler Roboterreiniger bekannt, welcher Bewegungsabstandsdetektionsmittel und Bewegungsrichtungsdetektionsmittel aufweist.

Aus der US 2004/0220698 A1 ist ein Roboter bekannt, welcher einen Infrarotsensor aufweist.

Aus der US 2002/0153185 A1 ist ein Roboterreiniger bekannt, welcher drahtlos mit einem externen Gerät kommuniziert.

Aus der US 5,276,618 ist ein System zur Navigationsreferenzierung innerhalb eines vorgegebenen Raums bekannt.

Aus der WO 00/25186 ist ein absturzsicheres autonomes Fahrsystem mit Begrenzungsmarken bekannt.

Aus der US 5,903,124 ist eine Vorrichtung zur Positionierung eines bewegten Körpers bekannt, welche an dem bewegten Körper angeordnet ist. Es sind zwei Abstandssensoren vorgesehen, welche bezüglich einer Bewegungsrichtung vorwärts weisen.

Der Erfindung liegt die Aufgabe zugrunde, ein selbstfahrendes Bodenreinigungsgerät der eingangs genannten Art bereitzustellen, welches eine effektive und insbesondere automatisierte Bodenreinigung ermöglicht.

Diese Aufgabe wird bei dem eingangs genannten selbstfahrenden Bodenreinigungsgerät erfindungsgemäß dadurch gelöst, dass ein Kreuzungsbereich, an welchem das erste Detektionsfeld und/oder das zweite Detektionsfeld die Mittelebene kreuzen, einen Abstand in einem Bereich zwischen 0,8 cm und 6 cm und insbesondere in einem Bereich zwischen 1 cm und 5 cm zu dem vorderen Ende des Bodenreinigungsgeräts hat, dass das erste Detektionsfeld sich über eine Verlängerung einer rechten Seite des Bodenreinigungsgeräts hinaus erstreckt und sich über das vordere Ende des Bodenreinigungsgeräts hinaus erstreckt und/oder dass das zweite Detektionsfeld sich über eine Verlängerung einer linken Seite des Bodenreinigungsgeräts und über das vordere Ende des Bodenreinigungsgeräts hinaus erstreckt, und dass das erste Detektionsfeld und das zweite Detektionsfeld jeweils keulenförmig ausgebildet sind.

Die optische Sensoreinrichtung eines erfindungsgemäßen selbstfahrenden Bodenreinigungsgeräts hat ein Sichtfeld, welches sowohl einen Bereich vor dem vorderen Ende des Bodenreinigungsgeräts umfasst als auch einen Randbereich links und rechts einer Verlängerung der linken Seite beziehungsweise rechten Seite des Bodenreinigungsgeräts nach vorne.

Dadurch kann beispielsweise eine Wand oder Ecke erkannt werden, oder es lassen sich Objekte in dem Bereich vor dem vorderen Ende erkennen. Dies ermöglicht es, gezielt an eine Wand beziehungsweise ein Objekt heranzufahren und beispielsweise auch an dieses "sanft" anzustoßen. Durch entsprechende Sensorsignale der optischen Sensoreinrichtung ist die relative Position des Bodenreinigungsgeräts zu dem Objekt bekannt und dies kann dazu benutzt werden, an das Objekt heranzufahren. Wenn an das Objekt angestoßen wird, dann lässt sich der Abstand zu dem Objekt (wie beispielsweise einer Wand oder einem Stuhlbein) minimieren. Dadurch ergibt sich ein optimiertes Reinigungsergebnis vor dem Objekt.

Die optische Sensoreinrichtung lässt sich auf einfache Weise ausbilden.

Das vordere Ende des Bodenreinigungsgeräts ist insbesondere ein Ende des Bodenreinigungsgeräts, welche nach vorne (bezogen auf die Vorwärts-Geradeausfahrtrichtung) am weitesten herausragt. Die Mittelebene des Fahrgestells ist insbesondere eine Symmetrieebene für das Fahrgestell, wobei beispielsweise eine Drehachse einer (ungelenkten) Radeinrichtung, welche an dem Fahrgestell angeordnet ist, senkrechte zu der Mittelebene orientiert ist.

Das erste Detektionsfeld erstreckt sich über eine (gedachte) Verlängerung einer rechten Seite des Bodenreinigungsgeräts hinaus und erstreckt sich über das vordere Ende des Bodenreinigungsgeräts hinaus. Die rechte Seite ist diejenige Seite des Bodenreinigungsgeräts, welche bezogen auf die Vorwärts-Geradeausfahrtrichtung rechts liegt und dabei den Punkt aufweist, welcher den größten Abstand zu der Mittelebene hat. Wenn das erste Detektionsfeld sich über diese Verlängerung der rechten Seite hinaus erstreckt, dann kann ein Objekt, welches neben dem Bodenreinigungsgerät positioniert ist, erkannt werden. Dadurch kann beispielsweise eine Wandverfolgung durchgeführt werden. Wenn das erste Detektionsfeld sich über das vordere Ende des Bodenreinigungsgeräts hinaus erstreckt, dann kann ein Objekt erkannt werden, welches vor (bezogen auf die Vorwärts-Geradeausfahrtrichtung) dem vorderen Ende des Bodenreinigungsgeräts liegt.

Aus dem gleichen Grund ist es günstig, wenn das zweite Detektionsfeld sich über eine (gedachte) Verlängerung einer linken Seite des Bodenreinigungsgeräts und über das vordere Ende des Bodenreinigungsgeräts hinaus erstreckt. Durch die Überlagerung des ersten Detektionsfelds und des zweiten Detektionsfelds in den Bereich vor dem vorderen Ende des Bodenreinigungsgeräts ergibt sich ein vergrößerter Bereich zur Objekterkennung vor dem vorderen Ende des Bodenreinigungsgeräts.

Es hat sich als günstig erwiesen, wenn ein Kreuzungsbereich, an welchem das erste Detektionsfeld und/oder das zweite Detektionsfeld die Mittelebene kreuzen, einen Abstand im Bereich zwischen 0,8 cm und 6 cm und insbesondere zwischen 1 cm und 5 cm zu dem vorderen Ende des Bodenreinigungsgeräts hat. Bei typischen Geschwindigkeiten eines selbstfahrenden Bodenreinigungsgeräts lässt sich dann noch eine rechtzeitige Abbremsung vor einem Objekt erreichen, wenn ein solches Objekt erkannt wird. Dadurch kann ein Anstoß an dem Objekt vermieden werden oder es kann ein "sanftes" Anstoßen erfolgen, bei dem die Geschwindigkeit unterhalb einer vorgegebenen Geschwindigkeitsschwelle liegt.

Günstig ist es, wenn das erste Detektionsfeld und das zweite Detektionsfeld sich mindestens näherungsweise auf der Mittelebene schneiden. Dadurch ergibt sich ein symmetrisches Gesichtsfeld mit einer optimierten Objekterkennung in dem Bereich vor dem vorderen Ende des Bodenreinigungsgeräts.

Ganz besonders vorteilhaft ist es, wenn die erste Sender-Empfänger-Einheit und die zweite Sender-Empfänger-Einheit mindestens näherungsweise symmetrisch zu der Mittelebene angeordnet sind und insbesondere im gleichen Abstand zu der Mittelebene angeordnet sind. Dadurch ergibt sich ein symmetrisches Sichtfeld und damit eine optimierte Detektierbarkeit von Objekten. Es lassen sich sowohl Objekte vor dem vorderen Ende des Bodenreinigungsgeräts als auch Objekte an Randbereichen links und rechts der Verlängerung von entsprechenden Seiten des Bodenreinigungsgeräts erkennen.

Es ist günstig, wenn die optische Sensoreinrichtung an oder in der Nähe des vorderen Endes angeordnet ist. Dadurch ergibt sich ein optimiertes Sichtfeld nach vorne und auch zur Seite hin. Eine Abschattung des Sichtfelds lässt sich auf einfache Weise vermeiden.

Günstig ist es, wenn die erste Sender-Empfänger-Einheit und die zweite Sender-Empfänger-Einheit jeweils einen Sender für optisches Sendelicht und einen Empfänger für Empfangslicht aufweisen, wobei Empfangslicht an einem Objekt reflektiertes Sendelicht umfasst. Das Empfangslicht kann auch Streulicht und dergleichen umfassen, welches insbesondere für die Auswertung nicht herangezogen wird. Es lässt sich dadurch auf einfache Weise eine optische Abstandsmessung insbesondere über Triangulation durchführen.

Es ist günstig, wenn eine Hauptrichtung des ersten Detektionsfelds und/oder des zweiten Detektionsfelds in einem Winkel im Bereich zwischen 10° und 45° und insbesondere im Bereich zwischen 15° und 35° zu einer Senkrechten zur Mittelebene liegen. Durch einen flachen spitzen Winkel, welcher unterhalb von (einschließlich) 45° liegt, lässt sich eine gute Objekterkennung durchführen. Bei einem Ausführungsbeispiel liegt der Winkel bei circa 18°.

Bei einem Ausführungsbeispiel ist es vorgesehen, dass die erste Sender-Empfänger-Einheit näher zu einer linken Seite des Bodenreinigungsgeräts liegt als zur Mittelebene. Dadurch lässt sich ein kleiner Winkel für eine Hauptrichtung des Detektionsfelds realisieren und Objekte, welche vor dem vorderen Ende des Bodenreinigungsgeräts liegen, lassen sich frühzeitig erkennen.

Aus dem gleichen Grund ist es günstig, wenn die zweite Sender-Empfänger-Einheit näher zu einer rechten Seite des Bodenreinigungsgeräts liegt als zur Mittelebene.

Alternativ ist es möglich, dass die erste Sender-Empfänger-Einheit näher zu der Mittelebene liegt als zu einer linken Seite des Bodenreinigungsgeräts. Dadurch kann ein Randbereich (bezogen auf eine Verlängerung der linken Seite des Bodenreinigungsgeräts) gut detektiert werden.

Aus dem gleichen Grund ist es günstig, wenn die zweite Sender-Empfänger-Einheit näher zu der Mittelebene liegt als zu einer rechten Seite des Bodenreinigungsgeräts.

Die oben genannten Anordnungen der ersten Sender-Empfänger-Einheit und der zweiten Sender-Empfänger-Einheit können auch kombiniert werden, wenn mehr als zwei Sender-Empfänger-Einheiten vorgesehen sind. Beispielsweise sind eine erste Sender-Empfänger-Einheit und eine zweite Sender-Empfänger-Einheit vorgesehen, welche näher zu Außenseiten (linke Seite und rechte Seite) als zur Mittelebene liegen. Eine dritte Sender-Empfänger-Einheit und eine vierte Sender-Empfänger-Einheit sind vorgesehen, welche dann näher zur Mittelebene liegen. Dadurch lässt sich eine frühzeitige Objekterkennung für den Bereich vor dem vorderen Ende durchführen und es lässt sich eine gute Randbereichdetektierbarkeit erreichen.

Bei einer Ausführungsform ist ein Abstand zwischen der ersten Sender-Empfänger-Einheit und der zweiten Sender-Empfänger-Einheit größer oder gleich als/wie ein Abstand zwischen der ersten Sender-Empfänger-Einheit und einer nächstliegenden Außenseite des Bodenreinigungsgeräts und/oder ein Abstand zwischen der zweiten Sender-Empfänger-Einheit und einer nächstliegenden Außenseite des Bodenreinigungsgeräts. Dadurch lassen sich insbesondere frühzeitige Objekte erkennen, wenn diese in dem Bereich vor dem vorderen Ende des Bodenreinigungsgeräts liegen.

Beispielsweise führt die optische Sensoreinrichtung eine Abstandsmessung durch. Diese Abstandsmessung erfolgt beispielsweise durch Triangulation.

Günstigerweise ist die Abstandsmessung zeitlich getaktet. Beispielsweise liegt eine Taktzeit unterhalb von 20 ms. Dadurch lässt sich eine gute zeitliche Auflösung zur Steuerung des Fahrbetriebs des Bodenreinigungsgeräts erreichen.

Günstigerweise ist eine Bürsteneinrichtung an oder in der Nähe des vorderen Endes angeordnet. Durch die Bürsteneinrichtung wird Schmutz mitgenommen, um ein optimiertes Reinigungsergebnis zu erhalten.

Günstig ist es, wenn die optische Sensoreinrichtung bezogen auf die Schwerkraftrichtung oberhalb der Bürsteneinrichtung angeordnet ist. Dadurch lassen sich die äußeren Abmessungen des selbstfahrenden Bodenreinigungsgeräts gering halten. Es lässt sich dadurch auch erreichen, dass die optische Sensoreinrichtung beispielsweise nicht über das vordere Ende hinausragt, um Beschädigungen der optischen Sensoreinrichtung bei Anschlag zu verhindern.

Das selbstfahrende Bodenreinigungsgerät ist insbesondere als Reinigungsroboter und insbesondere Saugroboter ausgebildet. Das selbstfahrende Bodenreinigungsgerät ist dann auch selbststeuernd und selbstlenkend und es lässt sich ein automatischer Reinigungsvorgang durchführen.

Insbesondere ist eine Steuerungseinrichtung vorgesehen, welche signalwirksam mit der optischen Sensoreinrichtung verbunden ist und welche einen Fahrbetrieb des Bodenreinigungsgeräts in Abhängigkeit von Sensorsignalen steuert. Die durch die optische Sensoreinrichtung bereitgestellten Sensorsignale können dann zur Optimierung des Fahrbetriebs des Bodenreinigungsgeräts verwendet werden.

Insbesondere umfasst die Steuerungseinrichtung mindestens eine der folgenden Untereinheiten: Eine Abbremseinrichtung, durch welche gesteuert über eine Objektdetektion mittels Sensorsignalen eine Geschwindigkeit des Bodenreinigungsgeräts verringerbar ist, eine Objekterkennungseinrichtung, durch welche Art und/oder Ausrichtung eines Objekts erkennbar ist, eine Stationserkennungseinrichtung, durch welche eine Bodenstation für das Bodenreinigungsgerät erkennbar ist. Durch eine Abbremseinrichtung lässt sich, wenn ein Objekt erkannt wird, ein Anschlagen oder hartes Anschlagen an das Objekt verhindern. Dies wiederum ermöglicht es, an ein Objekt sehr dicht heranzufahren. Wenn beispielsweise die Abbremseinrichtung dafür sorgt, dass die Geschwindigkeit des Bodenreinigungsgeräts unterhalb einer vorgegebenen maximalen Geschwindigkeitsschwelle gesenkt wird, dann kann das Bodenreinigungsgerät mit minimiertem Abstand an das Objekt heranfahren und insbesondere "weich" an dieses anschlagen. Es wird eine Beschädigung des Objekts vermieden, wobei um das Objekt ein optimiertes Reinigungsergebnis erzielbar ist. Durch die Objekterkennungseinrichtung lässt sich beispielsweise erkennen, ob eine Ecke oder eine Wand vorliegt. Es lässt sich beispielsweise auch beim Vorbeifahren erkennen, ob ein Stuhlbein oder Tischbein vorliegt. Durch die Stationserkennungseinrichtung lässt sich beispielsweise über Wandfolgung die Position der Bodenstation detektieren beziehungsweise die Position der Bodenstation lässt sich über die optische Sensoreinrichtung direkt detektieren.

Bei einem Ausführungsbeispiel ist ein Bodenreinigungssystem gebildet, welches (mindestens) ein Bodenreinigungsgerät und (mindestens) eine zugeordnete Bodenstation umfasst. Die Bodenstation ist insbesondere mit einem optisch detektierbaren Erkennungsmuster versehen. Das selbstfahrende Bodenreinigungsgerät kann dann über die optische Sensoreinrichtung direkt die Bodenstation erkennen.

Günstigerweise ist an dem Fahrgestell eine Radeinrichtung angeordnet. Die Radeinrichtung umfasst ein oder mehrere angetriebene Räder zur selbstfahrenden Ausbildung des Bodenreinigungsgeräts. Insbesondere ist eine Drehachse der Radeinrichtung senkrecht zu der Mittelebene orientiert.

Das erste Detektionsfeld und das zweite Detektionsfeld sind jeweils keulenförmig ausgebildet.

Die nachfolgende Beschreibung bevorzugter Ausführungsformen dient im Zusammenhang mit den Zeichnungen der näheren Erläuterung der Erfindung. Es zeigen:
- Figur 1: Eine schematische Seitenansicht eines Ausführungsbeispiels eines selbstfahrendes Bodenreinigungsgeräts mit Bodenstation;
- Figur 2: eine Teilschnittansicht längs der Linie 2-2 gemäß Figur 1 bei einem ersten Ausführungsbeispiel;
- Figur 3: eine Teilschnittansicht längs der Linie 3-3 gemäß Figur 1 bei einem zweiten Ausführungsbeispiel.

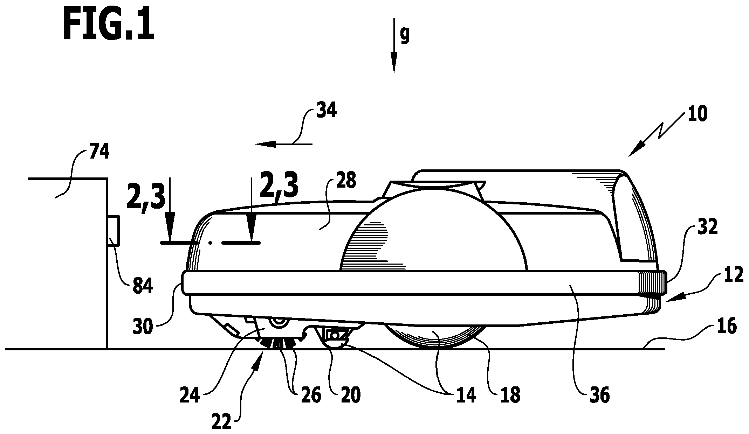

Ein Ausführungsbeispiel eines erfindungsgemäßen selbstfahrenden Bodenreinigungsgeräts, welches in Figur 1 gezeigt und dort mit 10 bezeichnet ist, umfasst ein Fahrgestell 12. An dem Fahrgestell 12 ist als Ganzes eine Radeinrichtung 14 angeordnet. Über die Radeinrichtung 14 ist das Bodenreinigungsgerät 10 auf einem Boden 16 fahrbar.

Die Radeinrichtung 14 weist beispielsweise angetriebene Haupträder 18 auf. Als Antrieb ist beispielsweise ein Elektromotor (in Figur 1 nicht gezeigt) vorgesehen. Ferner weist die Radeinrichtung 14 einen oder mehrere lenkbare Räder 20 auf. Einem solchen lenkbaren Rad oder solchen lenkbaren Rädern 20 ist insbesondere ein Lenkantrieb zugeordnet, welcher insbesondere einen Elektromotor umfasst (in Figur 1 nicht gezeigt).

An dem Fahrgestell 12 ist eine Bürsteneinrichtung 22 angeordnet, welche ein oder mehrere Bürstenwalzen 24 umfasst. Eine Bürstenwalze 24, welche insbesondere drehbar angeordnet ist und insbesondere angetrieben drehbar angeordnet ist, umfasst sich radial nach außen erstreckende Bürsten 26, welche auf den Boden 16 einwirken können. Durch Drehung einer Bürstenwalze 24 wird Schmutz mitgenommen, welcher in einen am Fahrgestell angeordneten Schmutzbehälter (in Figur 1 nicht gezeigt) gebracht wird.

An dem Fahrgestell 12 ist ein Gehäuse 28 angeordnet, in welchem Komponenten des Bodenreinigungsgeräts 10 wie Antriebsmotoren, Schmutzbehälter, Steuerungseinrichtung usw. geschützt angeordnet sind.

Das Bodenreinigungsgerät 10 hat ein vorderes Ende 30 und ein dem vorderen Ende gegenüberliegendes hinteres Ende 32. Das vordere Ende 30 ist an dem Fahrgestell 12 angeordnet oder gebildet. Beispielsweise ist es an dem Gehäuse 28 gebildet. Gleiches gilt für das hintere Ende 32.

Das Bodenreinigungsgerät 10 hat eine Vorwärts-Geradeausfahrtrichtung 34. Bezogen auf die Vorwärts-Geradeausfahrtrichtung 34 liegt das vordere Ende 30 vorne am Fahrgestell 12 und das hintere Ende 32 hinten am Fahrgestell 12. Das vordere Ende 30 definiert den am weitesten vorne liegenden Bereich des Bodenreinigungsgeräts 10, bezogen auf die Vorwärts-Geradeausfahrtrichtung.

Das Bodenreinigungsgerät 10 hat ferner bezogen auf die Vorwärts-Geradeausfahrtrichtung 34 eine linke Seite 36 (in Figur 1 ist eine Draufsicht auf diese linke Seite 36 gezeigt) und eine der linken Seite 36 gegenüberliegenden rechten Seite 38 (in Figur 1 nicht sichtbar). An der linken Seite 36 und der rechten Seite 38 liegen die am weitesten außen liegenden Bereiche des Bodenreinigungsgeräts 10 bezogen auf eine Querrichtung zu einer Verbindungsrichtung zwischen dem vorderen Ende 30 und dem hinteren Ende 32.

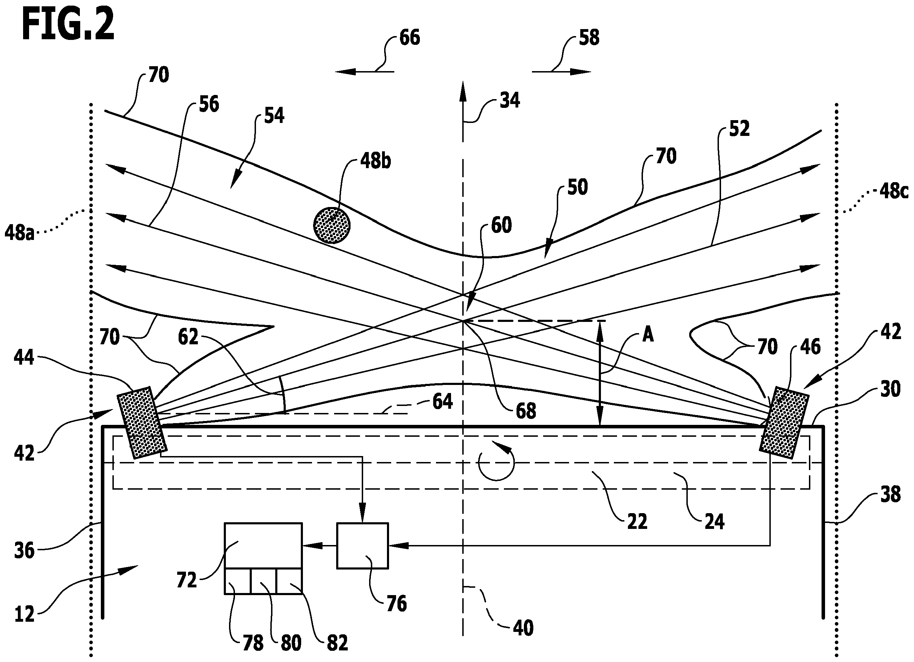

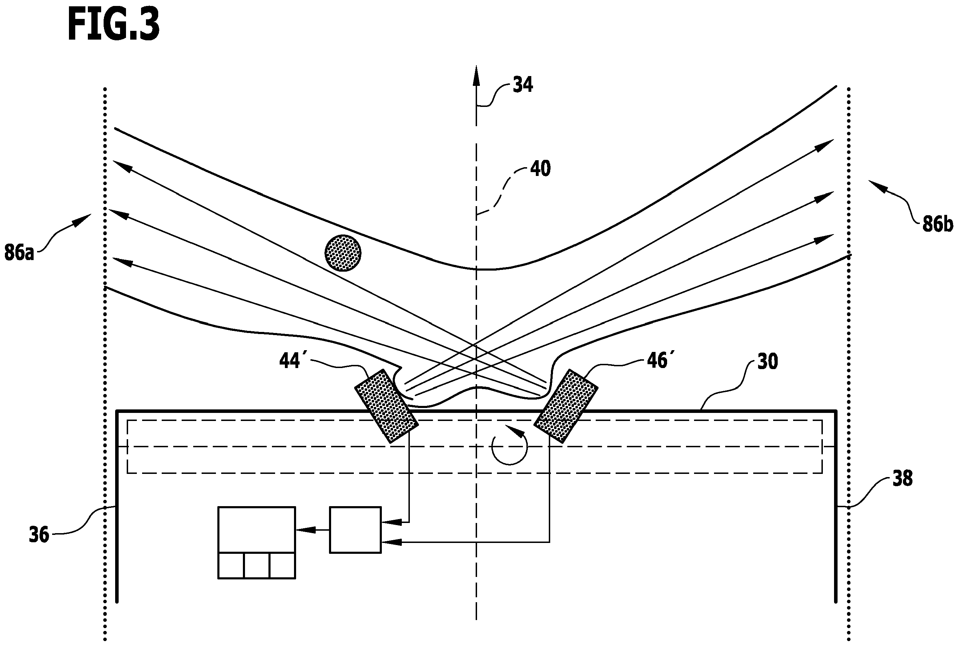

Das Fahrgestell 12 definiert eine Mittelebene 40 (vergleiche Figuren 2 und 3), welche mittig zwischen der linken Seite 36 und der rechten Seite 38 liegt. Die Vorwärts-Geradeausfahrtrichtung 34 ist parallel zu dieser Mittelebene 40.

An dem Fahrgestell 12 ist an oder in der Nähe des vorderen Ende 30 bezogen auf die Schwerkraftrichtung g oberhalb der Bürsteneinrichtung 22 eine optische Sensoreinrichtung 42 angeordnet. Diese optische Sensoreinrichtung 42 umfasst eine erste Sender-Empfänger-Einheit 44 und (mindestens) eine zweite Sender-Empfänger-Einheit 46. Die erste Sender-Empfänger-Einheit 44 und die zweite Sender-Empfänger-Einheit 46 sind an dem Fahrgestell 12 insbesondere oberhalb der Bürsteneinrichtung 22 angeordnet.

Die erste Sender-Empfänger-Einheit 44 und die zweite Sender-Empfänger-Einheit 46 umfassen jeweils einen Sender, welcher optisches Sendelicht (insbesondere im Infrarotbereich) emittiert, und einen Empfänger für Empfangslicht. Das Empfangslicht, welches ausgewertet wird, ist von einem oder mehreren Objekten 48a, 48b, 48c reflektiertes Sendelicht. Grundsätzlich wird von dem Empfänger der ersten Sender-Empfänger-Einheit 44 und der zweiten Sender-Empfänger-Einheit 46 auch Streulicht usw. empfangen. Durch entsprechende Einrichtungen wie Filter, Diskriminatoren usw. kann auf Sendelicht zurückgehendes Empfängerlicht, das heißt reflektiertes Sendelicht zur weiteren Auswertung "herausgefiltert" werden.

Die erste Sender-Empfänger-Einheit 44 und die zweite Sender-Empfänger-Einheit 46 können beispielsweise durch getrennte Bauteile für Sender und Empfänger realisiert sein, wobei diese Bauteile dann entsprechend zueinander ausgerichtet angeordnet sind. Bei einer vorteilhaften Ausführungsform sind Sender und Empfänger in einem Bauteil integriert, welches dann als Ganzes an dem Fahrgestell 12 positionierbar ist. Vorteilhafterweise sind dann auch eine optische Abbildungseinrichtung und/oder Filter und dergleichen in dieses Bauteil integriert.

Die erste Sender-Empfänger-Einheit 44 weist ein erstes Detektionsfeld 50 auf. Dieses erste Detektionsfeld 50 ist bestimmt durch die Abstrahlungscharakteristik des Senders der ersten Sender-Empfänger-Einheit 44. Das erste Detektionsfeld 50 ist insbesondere keulenförmig ausgebildet. Eine entsprechende "Detektionskeule" ist insbesondere rotationssymmetrisch zu einer Hauptrichtung 52 ausgebildet. Entsprechend weist die zweite Sender-Empfänger-Einheit 46 ein zweites Detektionsfeld 54 auf, welches durch das Sendelicht des Senders der zweiten Sender-Empfänger-Einheit 46 bestimmt ist. Dieses zweite Detektionsfeld 54 weist eine Hauptrichtung 56 auf.

Die erste Sender-Empfänger-Einheit 44 ist zwischen der Mittelebene 40 und der linken Seite 36 an dem Fahrgestell 12 angeordnet. Das erste Detektionsfeld 50 ist von dem vorderen Ende 30 des Bodenreinigungsgeräts 10 weg nach vorne rechts gerichtet. In Figur 1 ist die Richtung nach rechts mit dem Bezugszeichen 58 angedeutet. Das erste Detektionsfeld 50 kreuzt (schneidet) die Mittelebene 40 (in ihrer Verlängerung nach vorne) in einem Kreuzungsbereich 60, welcher vor dem vorderen Ende 30 des Bodenreinigungsgeräts 10 liegt.

Die Hauptrichtung 52 des ersten Detektionsfelds 50 liegt in einem Winkel 62 zu einer Senkrechten 64 zur Mittelebene 40. Der Winkel 62 liegt dabei in einem Bereich zwischen 10° und 45° und insbesondere in einem Bereich zwischen 15° und 35°.

Das erste Detektionsfeld 50 ist so ausgebildet, dass es über die rechte Seite 38 des Bodenreinigungsgeräts 10 hinausragt, so dass auch Objekte 48c, welche rechts von einer Verlängerung der rechten Seite 38 des Bodenreinigungsgeräts 10 positioniert sind, detektierbar sind. Die entsprechende Ausbildung des ersten Detektionsfelds 50 erfolgt durch die entsprechende Anordnung der ersten Sender-Empfänger-Einheit 44 und auch durch Vorgabe einer entsprechenden Signalstärke des Senders der ersten Sender-Empfänger-Einheit 44. Auch Objekte entsprechend dem Objekt 48b, welche vor dem vorderen Ende 30 des Bodenreinigungsgeräts 10 liegen (vor dem vorderen Ende 30 und zwischen Verlängerungen der Seiten 36, 38) und in das erste Detektionsfeld 50 fallen, können detektiert werden. (In dem Beispiel gemäß Figur 2 liegt das Objekt 48b nicht im ersten Detektionsfeld 50 sondern im zweiten Detektionsfeld 54.)

Die zweite Sender-Empfänger-Einheit 46 ist zwischen der Mittelebene 40 und der rechten Seite 38 des Bodenreinigungsgeräts 10 angeordnet. Sie ist derart angeordnet, dass das zweite Detektionsfeld 54 nach vorne links gerichtet ist. Die Richtung nach links ist in Figur 2 mit dem Bezugszeichen 66 angedeutet. Das zweite Detektionsfeld 54 ist dabei so ausgebildet (durch Anordnung der zweiten Sender-Empfänger-Einheit 46 und durch entsprechende Signalstärke des Senders), dass das zweite Detektionsfeld 54 über die linke Seite 36 des Bodenreinigungsgeräts 10 hinausragt, so dass auch ein Objekt 48a links von der linken Seite 36 detektierbar ist. Ferner weist das zweite Detektionsfeld 54 nach vorne (in Richtung der Vorwärts-Geradeausfahrtrichtung 34).

Die erste Sender-Empfänger-Einheit 44 und die zweite Sender-Empfänger-Einheit 46 sind vorzugsweise symmetrisch (insbesondere spiegelsymmetrisch) bezüglich der Mittelebene 40 angeordnet. Entsprechend symmetrisch sind dann auch das erste Detektionsfeld 50 und das zweite Detektionsfeld 54. Die Hauptrichtung 56 des zweiten Detektionsfelds 54 liegt in einem Winkel zu der Senkrechten 64, welcher betragsmäßig dem Winkel 62 entspricht mit entgegengesetzter Orientierung.

Das zweite Detektionsfeld 54 kreuzt (schneidet) die Mittelebene 40 vor dem vorderen Ende 30 des Bodenreinigungsgeräts 10 in dem Kreuzungsbereich 60. Die Kreuzungsbereiche, in welchem das erste Detektionsfeld 50 und das zweite Detektionsfeld 54 die Mittelebene 40 kreuzen, fallen insbesondere zusammen. Die Hauptrichtung 52 des ersten Detektionsfelds 50 und die Hauptrichtung 56 des zweiten Detektionsfelds 54 kreuzen sich vorzugsweise in einem Punkt 68, welcher auf der Mittelebene 40 vor dem vorderen Ende 30 liegt.

Vorzugweise weisen die erste Sender-Empfänger-Einheit 44 und die zweite Sender-Empfänger-Einheit 46 den gleichen Abstand zu der Mittelebene 40 auf. Die erste Sender-Empfänger-Einheit 44 und die zweite Sender-Empfänger-Einheit 46 liegen auf einer Linie, welcher parallel zur Senkrechten 64 ist.

Der Punkt 68, an welchem sich die Hauptrichtungen 52 und 56 schneiden, weist bei einem bevorzugten Ausführungsbeispiel einen Abstand A zwischen 0,8 cm und 6 cm und insbesondere einen Abstand in einem Bereich zwischen 1 cm und 5 cm zu dem vorderen Ende 30 des Bodenreinigungsgeräts 10 auf.

Ein Sichtfeld 70 der optischen Sensoreinrichtung 42 setzt sich zusammen aus einer Überlagerung des ersten Detektionsfelds 50 und des zweiten Detektionsfelds 54. Dieses Sichtfeld 70 ist so ausgebildet, dass Objekte 48b, welche innerhalb des Sichtfelds 70 vor dem vorderen Ende 30 des Bodenreinigungsgeräts 10 liegen, detektierbar sind. Ferner lassen sich Objekte 48a, 48c, wie beispielsweise Wände oder andere Gegenstände, welche links und/oder rechts von dem Bodenreinigungsgerät 10 liegen, detektieren.

Das Bodenreinigungsgerät 10 umfasst eine Steuerungseinrichtung 72, welche einen Fahrbetrieb des Bodengeräts 10 steuert. Das Bodenreinigungsgerät 10 ist insbesondere als selbststeuernder Roboter ausgebildet, welches Reinigungsvorgänge selbstständig durchführt. Die Steuerungseinrichtung 72 steuert einen Fahrbetrieb derart, dass eine vorzugsweise lückenlose Flächenreinigung durchgeführt wird. Ferner steuert die Steuerungseinrichtung 72 das Bodenreinigungsgerät 10 derart, dass dieses zu einer Bodenstation 74 (vgl. Figur 1) zurückkehrt, wenn beispielsweise Akkumulatoren des Bodenreinigungsgeräts 10 wieder aufgeladen werden müssen oder ein Saugbehälter entleert werden muss.

Die Steuerungseinrichtung 72 ist signalwirksam mit der optischen Sensoreinrichtung 42 verbunden; die optische Sensoreinrichtung 42 stellt der Steuerungseinrichtung 72 Sensorsignale bereit, mittels welchen der Fahrbetrieb gesteuert wird.

Bei einem Ausführungsbeispiel ist der optischen Sensoreinrichtung 42 eine Auswertungseinrichtung 76 zugeordnet, welche insbesondere analoge Sensorsignale von der ersten Sender-Empfänger-Einheit 44 und der zweiten Sender-Empfänger-Einheit 46 empfängt und diese derart auswertet und insbesondere digitale Signale bereitstellt, welche durch die Steuerungseinrichtung 72 direkt verarbeitbar sind. Es ist auch möglich, dass die Auswertungseinrichtung 76 in die Steuerungseinrichtung 72 integriert ist.

Die Steuerungseinrichtung 72 umfasst eine Untereinheit, welche eine Abbremseinrichtung 78 ist. Insbesondere wenn ein Objekt vor dem vorderen Ende 30 detektiert wird (wie beispielhaft das Objekt 48b in Figur 2), dann sorgt die Steuerungseinrichtung 72 für eine Verringerung der Geschwindigkeit des fahrenden Bodenreinigungsgeräts 10; die Signale der optischen Sensoreinrichtung 42 führen zu einer Abbremsung. Die Abbremsung ist beispielsweise derart, dass das Bodenreinigungsgerät 10 nicht "hart" sondern "weich" an ein Objekt wie das Objekt 48b anschlägt, das heißt höchstens mit einer Geschwindigkeit anschlägt, welche unter einer vorgegebenen Geschwindigkeitsschwelle liegt.

Der Abstand A ist so gewählt, dass in Abhängigkeit von einer maximalen Geschwindigkeit des Bodenreinigungsgeräts 10 bei Detektion eines entsprechenden Objekts ein weiches Anschlagen ermöglicht ist, das heißt dass bei der Detektion noch genügend Zeit für ein Abbremsen unter die Geschwindigkeitsschwelle verbleibt.

Zur optimalen Flächenreinigung ist es vorteilhaft, wenn das Bodenreinigungsgerät 10 an ein Objekt 48b "sanft" anstößt, und nicht das Objekt meidet, um eine Schmutzansammlung um das Objekt zu verhindern.

Die Steuerungseinrichtung 72 umfasst als weitere Untereinheit eine Objekterkennungseinrichtung 80. Durch diese Objekterkennungseinrichtung 80 lässt sich Art und/oder Ausrichtung eines Objekts erkennen. Beispielsweise lässt sich erkennen, ob eine Wand oder eine Ecke vorliegt. Es lässt sich beispielsweise erkennen, wie eine Wand in Relation zu dem Fahrgestell und insbesondere der Mittelebene 40 ausgerichtet ist. Es lässt sich beispielsweise auch beim Vorbeifahren erkennen, welche Art das Objekt ist. Beispielsweise lässt sich beim Vorbeifahren erkennen, ob ein Stuhlbein vorliegt.

Die Steuerungseinrichtung 72 weist als weitere Untereinheit eine Stationserkennungseinrichtung 52 auf. Durch diese lässt sich die Bodenstation 74 direkt und/oder indirekt optisch erkennen. Beispielsweise ist die Bodenstation 74 mit einem optisch detektierbaren Erkennungsmuster 84 versehen (vergleiche Figur 1), welches mittels der optischen Sensoreinrichtung 42 detektierbar ist. Dadurch kann eine Fahrt zu der Bodenstation 74 direkt gesteuert erfolgen. Es ist alternativ oder zusätzlich möglich, dass über die Stationserkennungseinrichtung 82 die Position der Bodenstation 74 in Relation zu der aktuellen Position des Bodenreinigungsgeräts 10 ermittelt wird, indem beispielsweise über die optische Sensoreinrichtung 42 eine Wandverfolgung durchgeführt wird (insbesondere in Kombination mit der Objekterkennungseinrichtung 80) und die entsprechenden Daten alleine oder unterstützend zu einer Fahrwegverfolgung benutzt werden, um eine Rückfahrt zu der Bodenstation 74 zu ermöglichen.

Die optische Sensoreinrichtung 42 misst den Abstand der optischen Sensoreinrichtung 42 (und damit des vorderen Endes 30) zu einem oder mehreren Objekten. Es erfolgt insbesondere eine getaktete Messung, bei der in bestimmten Zeitintervallen Messwerte geliefert werden. Es ist dabei möglich, dass Sendelicht gepulst emittiert wird und/oder eine gepulste Auswertung erfolgt. Die Abstandsmessung mittels der optischen Sensoreinrichtung 42 erfolgt insbesondere durch Triangulation. Die entsprechende Taktung erfolgt derart, dass auf einem Zeitintervall von kleiner 30 ms und insbesondere kleiner 20 ms Messungen erfolgen. Bei einem Ausführungsbeispiel liegt die Taktung für Messwerte bei circa 15 bis 16 ms.

Die Ausbildung der Detektionsfelder 50 und 54 als Keulen ist in Figur 2 übertrieben dargestellt. Ein typischer Winkel für die Keulenausbildung bezogen auf die Hauptrichtungen 52 und 56 liegt bei circa 1° bis 2°.

In Figur 2 (und 3) sind aus darstellerischen Gründen die erste Sender-Empfänger-Einheit 44, 44' und die zweite Sender-Empfänger-Einheit 46, 46' als über das vordere Ende 30 hinausragend gezeichnet. In der Praxis ist vorteilhaft, wenn diese gegenüber dem vorderen Ende zurückgesetzt sind, so dass beim Anstoßen des vorderen Endes 30 an ein Objekt (wie das Objekt 48b) kein mechanisches Anschlagen der optischen Sensoreinrichtung 42 an das Objekt erfolgt.

Vorzugsweise erfolgt die Abstandsermittlung über die optische Sensoreinrichtung 42 farbunabhängig mittels Infrarotlicht.

Grundsätzlich können die Hauptrichtungen 52, 56 bezogen auf die Schwerkraftrichtung g horizontal ausgerichtet sein; bei einem ebenen horizontalen Boden 16 sind sie dann parallel zum Boden 16 ausgerichtet. Sie können alternativ auch nach unten geneigt sein, das heißt in einem spitzen Winkel zur Horizontalen geneigt sein.

Bei dem in Figur 2 gezeigten Ausführungsbeispiel ist ein Abstand zwischen der ersten Sender-Empfänger-Einheit 44 und der zweiten Sender-Empfänger-Einheit 46 größer als der Abstand der ersten Sender-Empfänger-Einheit 44 zu der linken Seite 36 und der Abstand der zweiten Sender-Empfänger-Einheit 46 zu der rechten Seite 38. Der Abstand der ersten Sender-Empfänger-Einheit 44 und der zweiten Sender-Empfänger-Einheit 46 zu der Mittelebene 40 ist größer als der Abstand der entsprechenden Sender-Empfänger-Einheit 44 beziehungsweise 46 zu der nächstliegenden Seite, das heißt zu der linken Seite 36 bei der ersten Sender-Empfänger-Einheit 44 und der rechten Seite 38 bei der zweiten Sender-Empfänger-Einheit 46.

Die erste Sender-Empfänger-Einheit 44 ist im Bereich einer Ecke am Übergang der linken Seite 36 zu dem vorderen Ende 30 angeordnet. Die zweite Sender-Empfänger-Einheit 46 ist in einem Eckbereich am Übergang zwischen der rechten Seite 38 und dem vorderen Ende 30 angeordnet. Bei einer solchen Konfiguration lässt sich ein kleiner Winkel 62 realisieren. Dadurch werden Objekte wie das Objekt 48b, welche sich vor dem vorderen Ende 30 des Bodenreinigungsgeräts 10 befinden, früh erkannt.

Bei einer alternativen Ausführungsform, welche in Figur 3 gezeigt ist, wobei für gleiche Elemente wie bei der Ausführungsform gemäß Figur 2 gleiche Bezugszeichen verwendet werden, ist ein Abstand zwischen der ersten Sender-Empfänger-Einheit 44' und der zweiten Sender-Empfänger-Einheit 46' kleiner als der entsprechende Abstand zu der zugeordneten linken Seite 36 (bei der erste Sender-Empfänger-Einheit 44') beziehungsweise rechten Seite 38 (bei der zweiten Sender-Empfänger-Einheit 46'). Die erste Sender-Empfänger-Einheit 44' liegt näher zu der Mittelebene 40 als der linken Seite 36. Die zweite Sender-Empfänger-Einheit 46' liegt näher zu der Mittelebene 40 als zu der rechten Seite 38. Dadurch kann ein Randbereich 86a, 86b jenseits der linken Seite 36 beziehungsweise rechten Seite 38 des Bodenreinigungsgeräts 10 gut detektiert werden.

Das erfindungsgemäße Bodenreinigungsgerät 10 funktioniert wie folgt:
An der Bodenstation 74 werden Akkumulatoren des Bodenreinigungsgeräts 10 aufgeladen und ein Saugbehälter lässt sich dort entleeren. Von der Bodenstation 74 aus führt das Bodenreinigungsgerät 10 seine Reinigungsfahrten insbesondere automatisiert selbststeuernd (als Reinigungsroboter) durch.

Die Fahrten des Bodenreinigungsgeräts 10 sind durch die Steuerungseinrichtung 72 gesteuert, welche entsprechende Untereinheiten umfasst.

Durch die optische Sensoreinrichtung 42 wird ein Abstands-Sichtfeld 50 für das Bodenreinigungsgerät 10 bereitgestellt, welches sowohl einen vorderen Bereich vor dem vorderen Ende 30 als auch Randbereiche 86a, 86b links und rechts von dem vorderen Bereich erfassen kann. Es lässt sich dadurch insbesondere eine Wandverfolgung zur Steuerung der Fahrt des Bodenreinigungsgeräts 10 durchführen, und zwar sowohl für Wände rechts von der rechten Seite 38 als auch links von der linken Seite 36.

Es lässt sich dadurch ein definiertes Entlangfahren des Bodenreinigungsgeräts 10 an einer Wand durchführen, um das Reinigungsergebnis zu optimieren und Schmutzstreifen zu verhindern. Grundsätzlich lässt sich dadurch ein minimaler Abstand beim Entlangfahren an einer Wand erreichen.

Das Bodenreinigungsgerät 10 lässt sich an eine entsprechende Wand heranfahren, wobei ein sanftes Anstoßen erfolgen kann.

Es lassen sich auch Objekte wie beispielsweise ein Objekt 48b in dem Vorderbereich des Bodenreinigungsgeräts 10 erkennen. Es lässt sich hier wiederum ein genaues Anfahren an ein solches Objekt 48b erreichen mit einem sanften Anschlag, um ein optimiertes Reinigungsergebnis zu erhalten und beispielsweise eine Beschädigung des Objekts oder ein Zurückprallen des Bodenreinigungsgeräts 10 zu verhindern. Die optische Sensoreinrichtung 42 kann auch dazu genutzt werden, die Bodenstation 74 zu erkennen.

Durch eine symmetrische Anordnung der ersten Sender-Empfänger-Einheit 44, 44' und der zweiten Sender-Empfänger-Einheit 46, 46' bezogen auf die Mittelebene 40 ergibt sich ein optimiertes symmetrisches Sichtfeld 70.

Die optische Sensoreinrichtung 42 stellt beispielsweise analoge Signale bereit, welche in der Auswertungseinrichtung 76 ausgewertet werden und in digitale Signale zur Weiterverwendung durch die Steuerungseinrichtung 72 gewandelt werden.

Die optische Sensoreinrichtung 42 kann auch mehr als zwei Sender-Empfänger-Einheiten umfassen. Beispielsweise können die Ausführungsformen gemäß Figur 2 und 3 kombiniert werden, um sowohl eine hohe Randbereichsdetektierbarkeit zu erreichen als auch Objekte vor dem vorderen Ende früh erkennen zu können. In diesem Falle sind beispielsweise die Sender-Empfänger-Einheiten 44, 46 (vergleiche Figur 2) vorhanden und als dritte und vierte Sender-Empfänger-Einheiten die Einheiten 44', 46' (vergleiche Figur 3).

### Bezugszeichenliste

- 10: Bodenreinigungsgerät
- 12: Fahrgestell
- 14: Radeinrichtung
- 16: Boden
- 18: Hauptrad
- 20: Lenkbares Rad
- 22: Bürsteneinrichtung
- 24: Bürstenwalze
- 26: Bürste
- 28: Gehäuse
- 30: Vorderes Ende
- 32: Hinteres Ende
- 34: Vorwärts-Geradeausfahrtrichtung
- 36: Linke Seite
- 38: Rechte Seite
- 40: Mittelebene
- 42: Optische Sensoreinrichtung
- 44, 44': Erste Sender-Empfänger-Einheit
- 46, 46': Zweite Sender-Empfänger-Einheit
- 48a, 48b, 48c: Objekt
- 50: Erstes Detektionsfeld
- 52: Hauptrichtung
- 54: Zweites Detektionsfeld
- 56: Hauptrichtung
- 58: "nach rechts"
- 60: Kreuzungsbereich
- 62: Winkel
- 64: Senkrechte
- 66: "nach links"
- 68: Punkt
- 70: Sichtfeld
- 72: Steuerungseinrichtung
- 74: Bodenstation
- 76: Auswertungseinrichtung
- 78: Abbremseinrichtung
- 80: Objekterkennungseinrichtung
- 82: Stationserkennungseinrichtung
- 84: Muster
- 86a: Randbereich
- 86b: Randbereich

## Patentansprüche

1. Selbstfahrendes Bodenreinigungsgerät, umfassend ein Fahrgestell (12) mit einer Mittelebene (40), welche parallel zu einer Vorwärts-Geradeausfahrtrichtung (34) orientiert ist und an welchem ein bezogen auf die Vorwärts-Geradeausfahrtrichtung (34) vorderes Ende (30) des Bodenreinigungsgeräts (10) angeordnet oder gebildet ist, wobei das vordere Ende (30) ein Ende des Bodenreinigungsgeräts ist, welches nach vorne am weitesten hinausragt, und eine optische Sensoreinrichtung (42), welche an dem Fahrgestell (12) angeordnet ist, wobei die optische Sensoreinrichtung (42) eine erste Sender-Empfänger-Einheit (44) aufweist, welche bezogen auf die Vorwärts-Geradeausfahrtrichtung (34) links von der Mittelebene (40) angeordnet ist und ein erstes Detektionsfeld (50) hat, welches die Mittelebene (40) vor dem vorderen Ende (30) kreuzt und nach vorne rechts gerichtet ist, und mindestens eine zweite Sender-Empfänger-Einheit (46) aufweist, welche rechts von der Mittelebene (40) angeordnet ist und ein zweites Detektionsfeld (54) hat, welches die Mittelebene (40) vor dem vorderen Ende (30) kreuzt und nach vorne links gerichtet ist, **dadurch gekennzeichnet, dass** ein Kreuzungsbereich (60), an welchem das erste Detektionsfeld (50) und/oder das zweite Detektionsfeld (54) die Mittelebene (40) kreuzen, einen Abstand (A) in einem Bereich zwischen 0,8 cm und 6 cm und insbesondere in einem Bereich zwischen 1 cm und 5 cm zu dem vorderen Ende (30) des Bodenreinigungsgeräts hat, dass das erste Detektionsfeld (50) sich über eine Verlängerung einer rechten Seite (38) des Bodenreinigungsgeräts hinaus erstreckt und sich über das vordere Ende (30) des Bodenreinigungsgeräts hinaus erstreckt und/oder dass das zweite Detektionsfeld (54) sich über eine Verlängerung einer linken Seite (36) des Bodenreinigungsgeräts und über das vordere Ende (30) des Bodenreinigungsgeräts hinaus erstreckt, und dass das erste Detektionsfeld (50) und das zweite Detektionsfeld (54) jeweils keulenförmig ausgebildet sind.

2. Selbstfahrendes Bodenreinigungsgerät nach Anspruch 1, **dadurch gekennzeichnet, dass** das erste Detektionsfeld (50) und das zweite Detektionsfeld (54) sich mindestens näherungsweise auf der Mittelebene (40) schneiden und/oder dass die erste Sender-Empfänger-Einheit (44) und die zweite Sender-Empfänger-Einheit (46) mindestens näherungsweise symmetrisch zu der Mittelebene (40) angeordnet sind und insbesondere im gleichen Abstand zu der Mittelebene (40) angeordnet sind.

3. Selbstfahrendes Bodenreinigungsgerät nach einem der vorangehenden Ansprüche, **dadurch gekennzeichnet, dass** die optische Sensoreinrichtung (42) an oder in der Nähe des vorderen Endes (30) angeordnet ist.

4. Selbstfahrendes Bodenreinigungsgerät nach einem der vorangehenden Ansprüche, **dadurch gekennzeichnet, dass** die erste Sender-Empfänger-Einheit (44) und die zweite Sender-Empfänger-Einheit (46) jeweils einen Sender für optisches Sendelicht und einen Empfänger für Empfangslicht aufweisen, wobei Empfangslicht an einem Objekt (48a, 48b, 48c) reflektiertes Sendelicht umfasst.

5. Selbstfahrendes Bodenreinigungsgerät nach einem der vorangehenden Ansprüche, **dadurch gekennzeichnet, dass** eine Hauptrichtung (52; 56) des ersten Detektionsfelds (50) und/oder des zweiten Detektionsfelds (54) in einem Winkel (62) im Bereich zwischen 10° und 45° und insbesondere im Bereich zwischen 15° und 35° zu einer Senkrechten (64) zur Mittelebene (40) liegen.

6. Selbstfahrendes Bodenreinigungsgerät nach einem der vorangehenden Ansprüche, **dadurch gekennzeichnet, dass** die erste Sender-Empfänger-Einheit (44) näher zu einer linken Seite (36) des Bodenreinigungsgeräts liegt als zur Mittelebene (40) und/oder dass die zweite Sender-Empfänger-Einheit (46) näher zu einer rechten Seite (38) des Bodenreinigungsgeräts liegt als zur Mittelebene (40).

7. Selbstfahrendes Bodenreinigungsgerät nach einem der Ansprüche 1 bis 5, **dadurch gekennzeichnet, dass** die erste Sender-Empfänger-Einheit (44') näher zu der Mittelebene (40) liegt als zu einer linken Seite (36) des Bodenreinigungsgeräts und/oder dass die zweite Sender-Empfänger-Einheit (46') näher zu der Mittelebene (40) liegt als zu einer rechten Seite (38) des Bodenreinigungsgeräts.

8. Selbstfahrendes Bodenreinigungsgerät nach einem der vorangehenden Ansprüche, **dadurch gekennzeichnet, dass** ein Abstand zwischen der ersten Sender-Empfänger-Einheit (44) und der zweiten Sender-Empfänger-Einheit (46) größer oder gleich ist als/wie ein Abstand zwischen der ersten Sender-Empfänger-Einheit (44) und einer nächstliegenden Außenseite (36) des Bodenreinigungsgeräts und/oder ein Abstand zwischen der zweiten Sender-Empfänger-Einheit (46) und einer nächstliegenden Außenseite (38) des Bodenreinigungsgeräts.

9. Selbstfahrendes Bodenreinigungsgerät nach einem der vorangehenden Ansprüche, **dadurch gekennzeichnet, dass** die optische Sensoreinrichtung (42) eine Abstandsmessung durchführt, und insbesondere, dass die Abstandsmessung zeitlich getaktet ist.

10. Selbstfahrendes Bodenreinigungsgerät nach einem der vorangehenden Ansprüche, **dadurch gekennzeichnet, dass** eine Bürsteneinrichtung (22) an oder in der Nähe des vorderen Endes (30) angeordnet ist, und insbesondere, dass die optische Sensoreinrichtung (42) bezogen auf die Schwerkraftrichtung (g) oberhalb der Bürsteneinrichtung (22) angeordnet ist.

11. Selbstfahrendes Bodenreinigungsgerät nach einem der vorangehenden Ansprüche, **gekennzeichnet durch** eine Ausbildung als Reinigungsroboter und insbesondere Saugroboter.

12. Selbstfahrendes Bodenreinigungsgerät nach einem der vorangehenden Ansprüche, **gekennzeichnet durch** eine Steuerungseinrichtung (72), welche signalwirksam mit der optischen Sensoreinrichtung (42) verbunden ist und welche einen Fahrbetrieb des Bodenreinigungsgeräts in Abhängigkeit von Sensorsignalen steuert, und insbesondere, dass die Steuerungseinrichtung (72) mindestens eine der folgenden Untereinheiten umfasst:
- eine Abbremseinrichtung (78), durch welche gesteuert über eine Objektdetektion mittels Sensorsignalen eine Geschwindigkeit des Bodenreinigungsgeräts verringerbar ist;
- eine Objekterkennungseinrichtung (80), durch welche Art und/oder Ausrichtung eines Objekts (48a; 48b; 48c) erkennbar ist;
- eine Stationserkennungseinrichtung (82), durch welche eine Bodenstation (74) für das Bodenreinigungsgerät erkennbar ist.

13. Selbstfahrendes Bodenreinigungsgerät nach einem der vorangehenden Ansprüche, **gekennzeichnet durch** eine Bodenstation (74), welche mit einem optisch detektierbaren Erkennungsmuster (84) versehen ist.

## Claims

1. Self-driven floor cleaning device, comprising a chassis (12) with a centre plane (40) which is oriented parallel to a forward straight-ahead direction of travel (34) and on which a front end (30) of the floor cleaning device (10) in relation to the forward straight-ahead direction of travel (34) is arranged or formed, wherein the front end (30) is an end of the floor cleaning device which projects forward the furthest, and an optical sensor mechanism (42), which is arranged on the chassis (12), wherein the optical sensor mechanism (42) comprises a first transceiver unit (44), which, in relation to the forward straight-ahead direction of travel (34), is arranged to the left of the centre plane (40) and has a first detection field (50), which crosses the centre plane (40) in front of the front end (30) and is directed to the front right, and at least one second transceiver unit (46), which is arranged to the right of the centre plane (40) and has a second detection field (54), which crosses the centre plane (40) in front of the front end (30) and is directed to the front left, **characterized in that** a crossing region (60), at which the first detection field (50) and/or the second detection field (54) crosses the centre plane (40), has a spacing (A) in a range between 0.8 cm and 6 cm, and in particular in a range between 1 cm and 5 cm, from the front end (30) of the floor cleaning device, and **in that** the first detection field (50) extends beyond an extension of a right-hand side (38) of the floor cleaning device and extends beyond the front end (30) of the floor cleaning device, and/or the second detection field (54) extends beyond an extension of a left-hand side (36) of the floor cleaning device and beyond the front end (30) of the floor cleaning device, and **in that** the first detection field (50) and the second detection field (54) are each of lobe form.

2. Self-driven floor cleaning device according to claim 1, **characterized in that** the first detection field (50) and the second detection field (54) intersect at least approximately on the centre plane (40) and/or **in that** the first transceiver unit (44) and the second transceiver unit (46) are arranged at least approximately symmetrically with respect to the centre plane (40) and, in particular, arranged at the same distance from the centre plane (40).

3. Self-driven floor cleaning device according to any one of the preceding claims, **characterized in that** the optical sensor mechanism (42) is arranged at or close to the front end (30).

4. Self-driven floor cleaning device according to any one of the preceding claims, **characterized in that** the first transceiver unit (44) and the second transceiver unit (46) in each case have a transmitter for optical transmitted light and a receiver for received light, received light comprising transmitted light reflected at an object (48a, 48b, 48c).

5. Self-driven floor cleaning device according to any one of the preceding claims, **characterized in that** a main direction (52; 56) of the first detection field (50) and/or the second detection field (54) lies at an angle (62) in the range between 10° and 45°, and in particular in the range between 15° and 35°, with respect to a perpendicular (64) to the centre plane (40).

6. Self-driven floor cleaning device according to any one of the preceding claims, **characterized in that** the first transceiver unit (44) is located closer to a left-hand side (36) of the floor cleaning device than to the centre plane (40) and/or **in that** the second transceiver unit (46) is located closer to a right-hand side (38) of the floor cleaning device than to the centre plane (40).

7. Self-driven floor cleaning device according to any one of claims 1 to 5, **characterized in that** the first transceiver unit (44') is located closer to the centre plane (40) than to a left-hand side (36) of the floor cleaning device and/or **in that** the second transceiver unit (46') is located closer to the centre plane (40) than to a right-hand side (38) of the floor cleaning device.

8. Self-driven floor cleaning device according to any one of the preceding claims, **characterized in that** a spacing between the first transceiver unit (44) and the second transceiver unit (46) is greater than or equal to a spacing between the first transceiver unit (44) and a closest exterior side (36) of the floor cleaning device and/or a spacing between the second transceiver unit (46) and a closest exterior side (38) of the floor cleaning device.

9. Self-driven floor cleaning device according to any one of the preceding claims, **characterized in that** the optical sensor mechanism (42) carries out a distance measurement, and in particular **in that** the distance measurement is clocked with respect to time.

10. Self-driven floor cleaning device according to any one of the preceding claims, **characterized in that** a brush mechanism (22) is arranged on or close to the front end (30), and in particular **in that** the optical sensor mechanism (42) is arranged above the brush mechanism (22) in relation to the direction of gravity (g).

11. Self-driven floor cleaning device according to any one of the preceding claims, **characterized by** the self-driven floor cleaning device being configured as a cleaning robot and, in particular, a suction robot.

12. Self-driven floor cleaning device according to any one of the preceding claims, **characterized by** a control mechanism (72), which has an effective signal connection to the optical sensor mechanism (42) and which controls a drive operation of the floor cleaning device depending on sensor signals, and in particular in that the control mechanism (72) comprises at least one of the following sub-units:
- a braking mechanism (78) for reducing a speed of the floor cleaning device, said braking mechanism being controlled by an object detection by means of sensor signals;
- an object detection device (80) for detecting the type and/or orientation of an object (48a; 48b; 48c);
- a station detection device (82) for detecting a floor station (74) for the floor cleaning device.

13. Self-driven floor cleaning device according to any one of the preceding claims, **characterized by** a floor station (74), which is provided with an optically detectable detection pattern (84).

## Revendications

1. Appareil de nettoyage des sols automoteur, comprenant un châssis (12) présentant un plan médian (40), lequel est orienté parallèlement à un sens de déplacement vers l'avant en ligne droite (34) et sur lequel est agencée ou formée une extrémité avant (30) de l'appareil de nettoyage des sols (10) par rapport au sens de déplacement vers l'avant en ligne droite (34), dans lequel l'extrémité avant (30) est une extrémité de l'appareil de nettoyage des sols, laquelle fait le plus saillie vers avant, et un dispositif de détection optique (42), lequel est agencé sur le châssis (12), dans lequel le dispositif de détection optique (42) présente une première unité émettrice-réceptrice (44) laquelle, par rapport au sens de déplacement vers l'avant en ligne droite (34), est agencée à gauche du plan médian (40) et présente un premier champ de détection (50), lequel croise le plan médian (40) devant l'extrémité avant (30) et est dirigé à droite vers l'avant, et au moins une deuxième unité émettrice-réceptrice (46), laquelle est agencée à droite du plan médian (40) et présente un deuxième champ de détection (54), lequel croise le plan médian (40) devant l'extrémité avant (30) et est dirigé à gauche vers l'avant, **caractérisé en ce qu'**une zone d'intersection (60), au niveau de laquelle le premier champ de détection (50) et/ou le deuxième champ de détection (54) croisent le plan médian (40), est située à une distance (A) dans une plage comprise entre 0,8 cm et 6 cm et en particulier dans une plage comprise entre 1 cm et 5 cm de l'extrémité avant (30) de l'appareil de nettoyage des sols, **en ce que** le premier champ de détection (50) s'étend au-delà d'un prolongement d'un côté droit (38) de l'appareil de nettoyage des sols et de l'extrémité avant (30) de l'appareil de nettoyage des sols et/ou **en ce que** le deuxième champ de détection (54) s'étend au-delà d'un prolongement d'un côté gauche (36) de l'appareil de nettoyage des sols et au-delà de l'extrémité avant (30) de l'appareil de nettoyage des sols, et **en ce que** le premier champ de détection (50) et le deuxième champ de détection (54) sont chacun lobés.

2. Appareil de nettoyage des sols automoteur selon la revendication 1, **caractérisé en ce que** le premier champ de détection (50) et le deuxième champ de détection (54) se coupent au moins approximativement sur le plan médian (40) et/ou **en ce que** la première unité émettrice-réceptrice (44) et la deuxième unité émettrice-réceptrice (46) sont agencées au moins approximativement de manière symétrique au plan médian (40) et en particulier à égale distance du plan médian (40) .

3. Appareil de nettoyage des sols automoteur selon l'une quelconque des revendications précédentes, **caractérisé en ce que** le dispositif de détection optique (42) est agencé au niveau ou à proximité de l'extrémité avant (30).

4. Appareil de nettoyage des sols automoteur selon l'une quelconque des revendications précédentes, **caractérisé en ce que** la première unité émettrice-réceptrice (44) et la deuxième unité émettrice-réceptrice (46) comprennent chacune un émetteur pour la lumière d'émission optique et un récepteur pour la lumière de réception optique, dans lequel la lumière de réception comporte la lumière d'émission réfléchie sur un objet (48a, 48b, 48c).

5. Appareil de nettoyage des sols automoteur selon l'une quelconque des revendications précédentes, **caractérisé en ce qu'**une direction principale (52 ; 56) du premier champ de détection (50) et/ou du deuxième champ de détection (54) se situent dans un angle (62) dans la plage comprise entre 10° et 45° et en particulier dans la plage comprise entre 15° et 35° par rapport à une perpendiculaire (64) au plan médian (40).

6. Appareil de nettoyage des sols automoteur selon l'une quelconque des revendications précédentes, **caractérisé en ce que** la première unité émettrice-réceptrice (44) se situe plus près d'un côté gauche (36) de l'appareil de nettoyage des sols que du plan médian (40) et/ou **en ce que** la deuxième unité émettrice-réceptrice (46) se situe plus près d'un côté droit (38) de l'appareil de nettoyage des sols que du plan médian (40).

7. Appareil de nettoyage des sols automoteur selon l'une quelconque des revendications 1 à 5, **caractérisé en ce que** la première unité émettrice-réceptrice (44') se situe plus près du plan médian (40) que d'un côté gauche (36) de l'appareil de nettoyage des sols et/ou **en ce que** la deuxième unité émettrice-réceptrice (46') se situe plus près du plan médian (40) que d'un côté droit (38) de l'appareil de nettoyage des sols.

8. Appareil de nettoyage des sols automoteur selon l'une quelconque des revendications précédentes, **caractérisé en ce qu'**une distance entre la première unité émettrice-réceptrice (44) et la deuxième unité émettrice-réceptrice (46) est supérieure ou égale à une distance entre la première unité émettrice-réceptrice (44) et un côté extérieur (36) le plus proche de l'appareil de nettoyage des sols et/ou une distance entre la deuxième unité émettrice-réceptrice (46) et un côté extérieur (38) le plus proche de l'appareil de nettoyage des sols.

9. Appareil de nettoyage des sols automoteur selon l'une quelconque des revendications précédentes, **caractérisé en ce que** le dispositif de détection optique (42) réalise une mesure des distances, et en particulier **en ce que** la mesure des distances est synchronisée dans le temps.

10. Appareil de nettoyage des sols automoteur selon l'une quelconque des revendications précédentes, **caractérisé en ce qu'**un dispositif de brossage (22) est agencé au niveau ou à proximité de l'extrémité avant (30), et en particulier **en ce que** le dispositif de détection optique (42) est agencé au-dessus du dispositif de brossage (22) par rapport au sens de la gravité (g).

11. Appareil de nettoyage des sols automoteur selon l'une quelconque des revendications précédentes, **caractérisé en ce qu'**il est réalisé sous la forme d'un robot de nettoyage et en particulier d'un robot aspirateur.

12. Appareil de nettoyage des sols automoteur selon l'une quelconque des revendications précédentes, **caractérisé par** un dispositif de commande (72), lequel est relié au dispositif de détection optique (42) à des fins de transmission de signaux et lequel commande un mode de conduite de l'appareil de nettoyage des sols en fonction de signaux de capteur, et en particulier en ce que le dispositif de commande (72) comporte au moins une des sous-unités suivantes :
- un dispositif de freinage (78), par l'intermédiaire duquel une vitesse de l'appareil de nettoyage des sols peut être réduite de manière commandée au moyen de signaux de capteur par l'intermédiaire d'une détection d'objet ;
- un dispositif de repérage d'objet (80), par l'intermédiaire duquel un type et/ou une orientation d'un objet (48a ; 48b ; 48c) peuvent être repérés ;
- un dispositif de détection de station (82), par l'intermédiaire duquel une station de sol (74) pour l'appareil de nettoyage des sols peut être repérée.

13. Appareil de nettoyage des sols automoteur selon l'une quelconque des revendications précédentes, **caractérisé par** une station de sol (74), laquelle est pourvue d'un motif de repérage (84) optiquement détectable.
